(19) Europäisches Patentamt
European Patent Office
Office européen des brevets

(11) **EP 1 872 465 B1**

(12) **EUROPEAN PATENT SPECIFICATION**

(45) Date of publication and mention
of the grant of the patent:
**03.06.2020 Bulletin 2020/23**

(51) Int Cl.:
*H02K 17/42* *(2006.01)*    *H02K 19/10* *(2006.01)*

(21) Application number: **06750613.9**

(86) International application number:
**PCT/US2006/014613**

(22) Date of filing: **18.04.2006**

(87) International publication number:
**WO 2006/113746 (26.10.2006 Gazette 2006/43)**

(54) **HIGH-TORQUE SWITCHED RELUCTANCE MOTOR**

GESCHALTETER RELUKTANZMOTOR MIT HOHEM DREHMOMENT

MOTEUR À RELUCTANCE COMMUTÉ À COUPLE ÉLEVÉ

(84) Designated Contracting States:
**AT BE BG CH CY CZ DE DK EE ES FI FR GB GR HU IE IS IT LI LT LU LV MC NL PL PT RO SE SI SK TR**

(30) Priority: **06.03.2006 US 369202**
**18.04.2005 US 672258 P**

(43) Date of publication of application:
**02.01.2008 Bulletin 2008/01**

(73) Proprietors:
• **THE TEXAS A&M UNIVERSITY SYSTEM**
**College Station, TX 77843-3369 (US)**
• **Starrotor Corporation**
**College Station TX 77840 (US)**

(72) Inventors:
• **RABROKER, George A.**
**College Station, TX 77845 (US)**

• **HOLTZAPPLE, Mark T.**
**College Station, TX 77840-4859 (US)**
• **ESHANI, Mark**
**College Station, TX 77845 (US)**

(74) Representative: **Barker Brettell LLP**
**100 Hagley Road**
**Edgbaston**
**Birmingham B16 8QQ (GB)**

(56) References cited:
EP-A1- 0 677 914    WO-A1-90/11641
WO-A1-02/091547    JP-A- 2003 339 128
US-A- 3 401 285    US-A- 5 289 072
US-A- 5 365 137    US-A- 5 798 591
US-A- 5 854 526    US-A1- 2003 011 268
US-B1- 6 336 317

**Description**

TECHNICAL FIELD OF THE INVENTION

This invention relates in general to electric machines and, more particularly, to a high-torque switched reluctance motor.

BACKGROUND OF THE INVENTION

Switched reluctance motors (SRM) generally include components constructed from magnetic materials such as iron, nickel, or cobalt. A pair of opposing coils in the SRM may become electronically energized. The inner magnetic material is attracted to the energized coil causing an inner assembly to rotate while producing torque. Once alignment is achieved, the pair of opposing coils is de-energized and a next pair of opposing coils is energized.

JP 2003339128 discloses a motor with a stator, including a stator core for excitation and a rotor disposed in the stator, wherein an external magnetic field is generated from the stator core, almost in parallel with the rotating shaft of the rotor and the rotor 14 is rotated by the external magnetic field. The stator core includes a layered product made of a steel plate, which is formed into a winding shape and is arranged so as to sandwich the rotor in the direction of the rotating shaft

WO 02/091547 discloses a segmented stator design based on general E shaped cores traditionally used for single-phase transformers and inductors. The E-cores has a coil around the centered leg and is assembled parallel to the rotor axis, which means it will function with the transverse flux principle. A radial flux principle can also be performed with the E-cores if the E-cores are divided into two U-sections with a full pitch winding in between them. The E-core machines using the transverse principle can have different pole-shapes such the normal force between the rotor and stator are significantly reduced.

US 5365137 discloses a modular, expandable, low-weight electric motor with a cylindrical, non-magnetic casing formed in axially-aligned sections. The casing sections are releasably connected to define a unitary structure with a polygonal exterior surface and a circular interior surface. Separate U-shaped stator pole assemblies are releasably mounted against the exterior of the casing, each casing section carrying the poles associated with a different motor phase. The poles extend through apertures into the interior of the casing, and have active pole faces which are curved and substantially flush with the circular interior surface of the casing. A modular rotor is mounted in the interior of the casing and carries magnetic elements in axially spaced-apart sets corresponding to each motor phase. The active faces of the magnetic elements are curved and oriented in a cylindrical arrangement. During each rotation of the rotor, the pole faces of each motor phase simultaneously and repeatedly register with the associated magnetic element faces forming air gaps, and the magnetic elements simultaneously complete local magnetic circuits with each stator pole assembly. The sets of magnetic rotor elements are indexed circumferentially relative to one another such that the motor is self-starting.

SUMMARY OF THE INVENTION

The invention is as defined in claim 1. The dependent claims relate to preferred embodiments. According to one embodiment of the present invention, an electric machine comprises a stator and a rotor. The stator has at least one stator pole with a first leg and a second leg. The rotor has at least one rotor pole. The rotor rotates relative to the stator. The at least one rotor is configured to rotate between the first leg and the second leg of the at least one stator pole.

Certain embodiments of the invention may provide numerous technical advantages. For example, a technical advantage of one embodiment may include the capability to increase the symmetry of poles in an electrical machine to increase torque. Other technical advantages of other embodiments may include the capability to allow very small gaps in an electrical machine to be maintained, even when components deform due to thermal and centrifugal effects. Other technical advantages of other embodiments may include the capability to allow external coils to be separated from the interior of an electrical machine, which may be chemically corrosive if it is integrated with compressors, expanders, or pumps. Yet other technical advantages of other embodiments may include the capability to utilize U-shaped poles that are electrically and magnetically isolated from adjacent poles, thereby allowing them to be built in modules for insertion into a non-magnetic frame, which may have ease of manufacture and repair. Yet other technical advantages of other embodiments may include the capability to utilize U-shaped poles that are external to the motor enclosure, enabling better thermal contact with the ambient environment and reducing the tendency to overheat. Still yet other technical advantages of other embodiments may include the capability to create a magnetic flux in a rotor of an electrical machine that does not cross the axis of the rotor. Still yet other technical advantages of other embodiments may include the capability to allow the space within the interior of a rotor of an electrical machine to be available for items such as, but not limited to compressors, expanders, engines, and pumps. Although specific advantages have been enumerated above, various embodiments may include all, some, or none of the enumerated advantages. Additionally, other technical advantages may become readily apparent to one of ordinary skill in the art after review of the following figures, description, and claims.

BRIEF DESCRIPTION OF THE DRAWINGS

To provide a more complete understanding of the embodiments of the invention and features and advantages thereof, reference is made to the following description, taken in conjunction with the accompanying figures, wherein like reference numerals represent like parts, in which:

FIGURE 1A shows a schematic representation of a conventional switched reluctance motor (SRM);
FIGURE 1B is a dot representation of the SRM of FIGURE 1A;
FIGURE 2 shows a schematic representation of a long flux path through the conventional switched reluctance motor (SRM) of FIGURE 1A;
FIGURE 3 shows in a chart the effect of MMF drop in the torque production of a one-phase, one horsepower machine;
FIGURE 4 shows a dot representation for a switched reluctance motor (SRM), according to an embodiment of the invention;
FIGURES 5A and 5B illustrate a rotor/stator configuration, according to an embodiment of the invention;
FIGURE 6 shows an outer rotor assembly of a rotor/stator configuration, according to an embodiment of the invention;
FIGURE 7 shows an inner rotor assembly of a rotor/stator configuration, according to an embodiment of the invention;
FIGURE 8 shows a stator/compressor case of a rotor/stator configuration, according to an embodiment of the invention;
FIGURE 9 shows a cutaway view of a composite assembly of a rotor/stator configuration, according to an embodiment of the invention; and
FIGURE 10 shows the composite assembly of FIGURE 9 without the cutaway;
FIGURE 11 shows a side view of how a rotor changes shape when it expands due to centrifugal and thermal effects;
FIGURE 12 shows a rotor/stator configuration, according to another embodiment of the invention;
FIGURE 13A and 13B show a rotor/stator configuration, according to another embodiment of the invention;
FIGURE 14 shows a rotor/stator configuration, according to another embodiment of the invention;
FIGURE 15 shows an unaligned position, a midway position, and an aligned position;
FIGURE 16 shows an energy conversion loop;
FIGURE 17 shows a rotor/stator configuration, according to another embodiment of the invention;
FIGURE 18 shows a rotor/stator configuration, according to another embodiment of the invention;
FIGURE 19 shows a rotor configuration, according to another embodiment of the invention;
FIGURE 20 shows a rotor/stator configuration, according to another embodiment of the invention;
FIGURES 21A and 21B show a rotor/stator configuration, according to another embodiment of the invention;
FIGURE 22 illustrates the formation of flux lines in a SRM drive;
FIGURES 23 and 24 shows the placement of easily saturated materials or flux barriers under the surface of rotors; and
FIGURE 25 shows a chart of B-H curves for various alloys.

DETAILED DESCRIPTION OF EXAMPLE EMBODIMENTS

It should be understood at the outset that although example implementations of embodiments of the invention are illustrated below, embodiments of the present invention may be implemented using any number of techniques, whether currently known or in existence. The present invention should in no way be limited to the example implementations, drawings, and techniques illustrated below. Additionally, the drawings are not necessarily drawn to scale.

Various electric machines such as motors and generators and type variations associated with such motors and generators may avail benefits from the embodiments described herein. Example type variations include, but are not limited to, switched reluctance motors (SRM), permanent magnet AC motors, brushless DC (BLDC) motors, switched reluctance generators (SRG), permanent magnet AC generators, and brushless dc generators (BLDCG). Although particular embodiments are described with reference to one or more type variations of motor and/or generators, it should be expressly understood that such embodiments may be utilized with other type variations of motors or generators. Accordingly, the description provided with certain embodiments described herein are intended only as illustrating examples type variations that may avail benefits of embodiments of the invention. For example, teachings of some embodiment of the invention increase the torque, power, and efficiency of electric motors, particularly switched reluctance motors (SRM). Such embodiments may also be used with permanent magnet AC motors and brushless DC (BLDC) motors. Some of same advantages described with reference to these embodiments may be realized by switched reluctance generators (SRG), permanent magnet AC generators, and brushless dc generators (BLDCG).

In conventional radial and axial SRMs, the magnetic flux flows through a long path through the whole body of a stator and rotor. Due to the saturation of iron, conventional SRMs have a large drop in the magneto motive force (MMF) because the flux path is so large. One way to reduce the loss of MMF is to design thicker stators and rotors, which reduces the flux density. However, this approach increases the weight, cost, and size of the machine. Accordingly, teachings of embodiment of the invention recognize that a more desirable approach to reduce these losses is to minimize the flux path, which is a function of geometry and type of machine.

Teachings of some embodiments additionally introduce a new family of stator/pole interactions. In this family, stator poles have been changed from a conventional cylindrical shape to U-shaped pole pairs. This configuration allows for a shorter magnetic flux path, which in particular embodiments may improve the efficiency, torque, and power density of the machine.

To take full advantage of the isolated rotor/stator structures of this invention, sensorless SRM and BLDC control methods may be utilized, according to particular embodiments.

The switched reluctance motor (SRM) has salient poles both on both the stator and rotor. It has concentrated windings on the stator and no winding on the rotor. This structure is inexpensive and rugged, which helps SRMs to operate with high efficiency over a wide speed range. Further, its converter is fault tolerant. SRMs can operate very well in harsh environments, so they can be integrated with mechanical machines (e.g., compressors, expanders, engines, and pumps). However, due to the switching nature of their operation, SRMs need power switches and controllers. The recent availability of inexpensive power semiconductors and digital controllers has allowed SRMs to become a serious competitor to conventional electric drives.

There are several SRM configurations depending on the number and size of the rotor and stator poles. Also, as with conventional electric machines, SRMs can be built as linear-, rotary-, and axial-flux machines. In these configurations, the flux flows 180 electrical degrees through the iron. Due to saturation of iron, this long path can produce a large drop in MMF, which decreases torque density, power, and efficiency of the machines. Increasing the size of the stator and rotor back iron can avoid this MMF drop, but unfortunately, it increases the motor size, weight, and cost. Using bipolar excitation of phases can shorten the flux path, but they need a complex converter. Also, they are not applicable when there is no overlapping in conduction of phases.

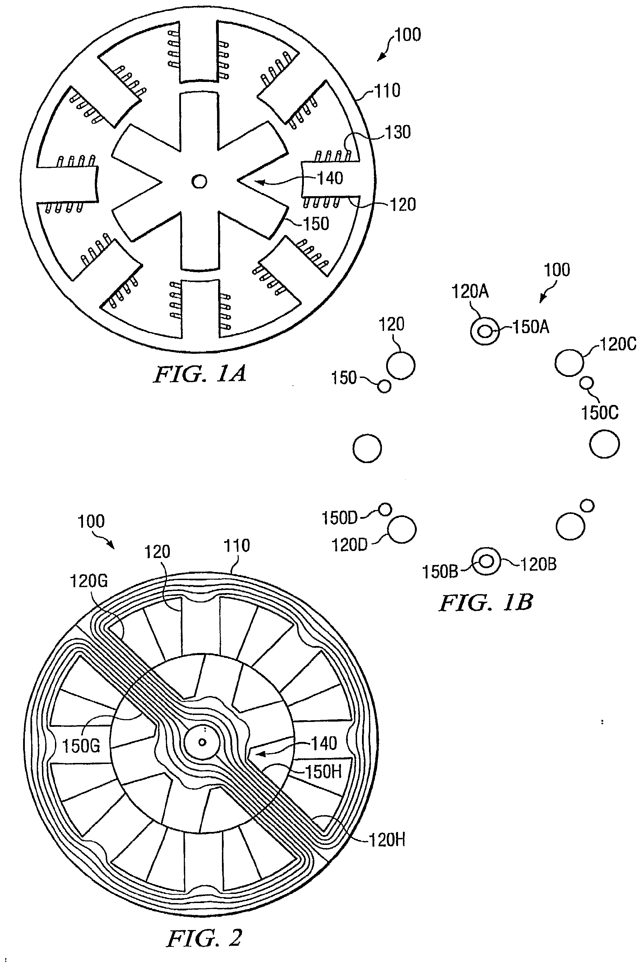

FIGURE 1A shows a schematic representation of a conventional switched reluctance motor (SRM) 100. The SRM 100 of FIGURE 1A includes a stator 110 and a rotor 140. The stator 110 includes eight stationary stator poles 120 (each with its own inductor coil 120) and the inner rotor 140 includes six rotating rotor poles 150 (no coils). The components of the SRM 100 are typically constructed from magnetic materials such as iron, nickel, or cobalt. In particular configurations, the materials of the SRM 100 can be laminated to reduce the effect of eddy currents. At any one time, a pair of opposing coils 130 is energized electrically. The inner magnetic material in the rotor poles 150 of the rotor 140 are attracted to the energized coil 130 causing the entire inner rotor 140 to rotate while producing torque. Once alignment is achieved, the pair of opposing coils 130 is de-energized and the next pair of opposing coils 130 is energized. This sequential firing of coils 130 causes the rotor 140 to rotate while producing torque. An illustration is provided with reference to FIGURE 1B.

FIGURE 1B is a dot representation of the SRM 100 of FIGURE 1A. The white circles represent the stator poles 120 and the black circles represent the rotor poles 150. Stator poles 120A, 120B are currently aligned with rotor poles 150A, 150B. Accordingly, the coils associated with this alignment (coils associated with stator poles 120A, 120B) can be de-energized and another set of coils can be fired. For example, if the coils associated with the stator poles 120C and 120D are fired, rotor poles 150C, 150D will be attracted, rotating the rotor 140 counter-clockwise. The SRM 100 of FIGURE 1 has inherent two-fold symmetry.

FIGURE 2 shows a schematic representation of a long flux path through the conventional switched reluctance motor (SRM) 100 of FIGURE 1A. In the SRM 100, magnetic fluxes must traverse 180 degree through both the stator 110 and the rotor 140 - for example, through stator pole 120G, rotor pole 150G, rotor pole 150H, stator pole 120H, and inner rotor 140, itself. Such long flux paths can lead to the creation of undesirably eddies, which dissipate energy as heat. Additionally, due to the high flux density, the magneto motive force (MMF) drop will be very high, particularly if the stator 110 and rotor 140 back iron are thin.

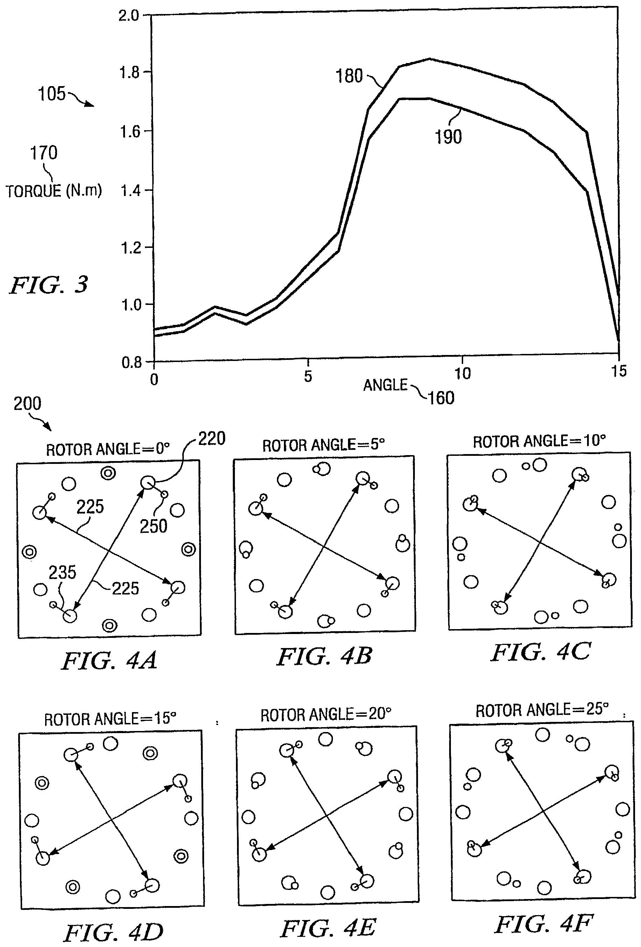

As an example of MMF drop, FIGURE 3 shows in a chart 105 the effect of MMF drop in the torque production of a one-phase, one horsepower machine. In FIGURE 3, output torque 170 is plotted against rotor angle 160. Line 180 show torque without the effect of saturation in the rotor 140 and stator 110 back iron and line 190 shows torque with the effect of saturation in rotor 140 and stator 110 back iron. As can be seen, the MMF drop in torque production can be more than 6%. Accordingly, teachings of some embodiments reduce the length of the flux path. Further details of such embodiments will be described in greater detail below.

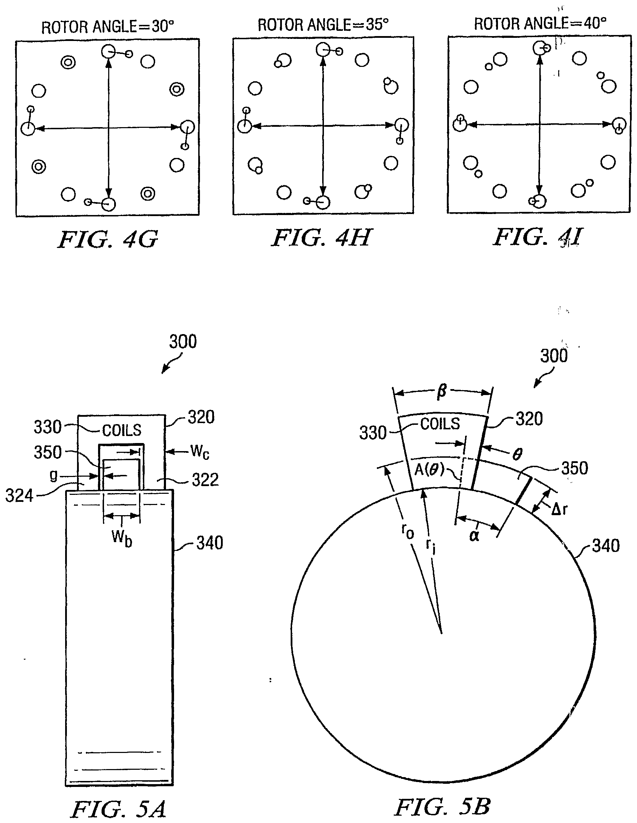

FIGURE 4 shows a dot representation for a switched reluctance motor (SRM) 200, according to an embodiment of the invention. The SRM 200 of FIGURE 4 may operate in a similar manner to the SRM described with reference to FIGURE 1B. However, whereas the SRM 100 of FIGURE 1B fire two coils associated with two stator pole 120 at a time, the SRM of FIGURE 4 fires four coils associated with four stator poles 220 at a time. The increased firing of such coils/stator poles 220 increases the torque.

The SRM 200 of FIGURE 4 has a rotor with eight rotor poles 250 and a stator with twelve stator poles 220. The active magnetized sets of stator poles 220 are denoted by arrowed lines 225 and the attractive forces through the flux linkages (e.g., between a rotor pole 250 and stator pole 220) are shown by the shorter lines 235 through a counter-clockwise progression of 40° of rotor rotation. At 45°, the configuration would appear identical to the 0° configuration. As can be seen with reference to these various rotor angles, as soon as a alignment between four stator poles 220 and four rotor poles 250 occur, four different stator poles 220 are fired to attract the rotor poles 250 to the four different stator poles 220.

The switched reluctance motor 200 in FIGURE 4 has four-fold symmetry. That is, at any one time, four stator poles 220 (the sets denoted by arrowed lines 225) are energized, which as referenced above, is twice as many as a conventional switched reluctance motor (e.g., SRM 100 of FIGURE 1). Because twice as many stator poles 220 are energized, the torque is doubled.

In particular embodiments, adding more symmetry will further increase torque. For example, six-fold symmetry would increase the torque by three times compared to a conventional switched reluctance motor. In particular embodiments, increased symmetry may be achieved by making the rotor as blade-like projections that rotate within a U-shaped stator, for example, as described below with reference to the embodiments of FIGURES 5A and 5B. In other embodiments, increased symmetry may be achieved in other manners as described in more details below.

FIGURES 5A and 5B illustrate a rotor/stator configuration 300, according to an embodiment of the invention. For purposes of illustration, the embodiment of the rotor/stator configuration 300 of FIGURES 5A and 5B will be described as a switched reluctance motor (SRM). However, as briefly referenced above, in particular embodiments, the rotor/state configuration 300 may be utilized as other types of motors. And, in other embodiments, the rotor/state configuration 300 may be utilized in other types of electric machines such as generators.

In the rotor/state configuration 300 of FIGURES 5A and 5B, a blade-like rotor pole or blade 350, affixed to a rotating body 340, is shown passing through a U-shaped electromagnet core or U-shaped stator pole 320. In this configuration, the flux path is relatively short, compared to conventional SRMs. For example, the magnetic flux produced by a coil 330 fired on the U-shaped pole 320 would pass through one leg 322 of the U-shaped stator pole 320 through the blade 350 and to the other leg 324 of the U-shaped stator pole 320 in a circular-like path. In particular embodiments, this short path - in addition to diminishing the long path deficiencies described above - enables increased symmetry because the path does not traverse the center of the rotating body 340 and has little effect, if any, on other flux paths. Additionally, in particular embodiments, the short path enables use of the center of the rotating body 340 for other purposes. Further details of such embodiments will be described below. Furthermore, radial loads are applied to the rotor with this embodiment and axial loads on the rotor are balanced. Additionally, extra radius is afforded by the blade 350, thus increasing generated torque.

The following is a first order analysis of the electromagnetic interaction between a single blade 350/pole 320 set, according to an embodiment of the invention. The schematic of FIGURES 5A and 5B is a blade 350/pole 320 set where $r_i$ defines the outer boundary of the outer compressor rotor 340, $r_o$ is the radius at the blade tips, $\Delta r$ is the radial length of the blade 350, $\alpha$ is the angular dimension of the blade 350, $\beta$ is the angular dimension of the coil 330, $\theta$ is the angular engagement of the rotor blade 350 within the coil 330, $A(\theta)$ is the area available for flux linkage, g is the gap dimension on each side of the blade 350, $w_b$ is the width of the blade 350, and $w_c$ is the width of the core.

The magnetic flux through the magnetic circuit created is:

$$\phi = \frac{Ni}{\mathfrak{R}_c + \mathfrak{R}_g} \qquad\qquad \text{Eq. 1A}$$

where N is the number of turns in the coil 330, i is the current through the coil 330, and $R_c$ and $R_g$ are the reluctances of the core and the air gap, respectively. The reluctances are

$$\mathfrak{R}_c = \frac{l_c}{\mu A_c} \quad \mathfrak{R}_g = \frac{2g}{\mu_o A_g} \qquad\qquad \text{Eq. 2A}$$

where $l_c$ is the flux length of the core material, $\mu$ is the permeability of the core material, $A_c$ is the cross sectional area of the core, g is the air gap thickness, $\mu_o$ is the permeability of free space (in the air gap), and $A_g$ is the area of the gap over which flux linkage occurs. Two gaps, one on either side of the blade 350, have been accounted for in the reluctance expression. The magnetic reluctance, R, is analogous to electrical resistance. Because the permeability of the core material is far greater than that of air, the reluctance of the air gap dominates in Eq. 1A, so substituting the expression for $R_g$ into Eq. 1A gives

$$\phi \approx \frac{Ni\mu_o A_g}{2g} \qquad \text{Eq. 3A}$$

Because the air gap has been assumed to dominate the total reluctance, the inductance, L, can be expressed as

$$L = \frac{\lambda}{i} = \frac{N\phi}{i} = \frac{N^2\mu_o A_g}{2g} \qquad \text{Eq. 4A}$$

where $\lambda = N\phi$ is the flux linkage.

The stored energy in the field is given by

$$W_{fld} = \frac{1}{2}\frac{\lambda^2}{L}. \qquad \text{Eq. 5A}$$

An expression for $L(\theta)$ is required in Eq. 5A. Under present assumptions, the only reason for the inductance to vary with rotor angle is that the flux linkage area over the air gap, $A_g$, changes with rotation. From FIGURES 5A and 5B, the following relationship between $\theta$ and $A_g$ can be written as

$$A_g\left(r^*\theta\right) = 2\Delta r\left(r^*\theta\right) \qquad \text{Eq. 6A}$$

because the air gap dimensions change by sweeping the radial span $\Delta r = r_o - r_i$ over the arc length $r^*\theta$, where $r^* = 1/2(r_o + r_i)$. Thus

$$L\left(r^*\theta\right) = \frac{N^2\mu_o\Delta r\left(r^*\theta\right)}{g}, \qquad \text{Eq. 7A}$$

and Eq. 5A will be modified to

$$W_{fld} = \frac{1}{2}\frac{\lambda^2}{L\left(r^*\theta\right)}. \qquad \text{Eq. 8A}$$

Substituting Eq. 7A into Eq. 8A gives

$$W_{fld} = \frac{1}{2}\frac{\lambda^2 g}{N^2\mu_o\Delta r\left(r^*\theta\right)} = \frac{\lambda^2 g}{2N^2\mu_o\Delta r\left(r^*\theta\right)}. \qquad \text{Eq. 9A}$$

From conservation of energy, $dW_{fld}$ can be expressed as

$$dW_{fld}\left(\lambda, r^*\theta\right) = id\lambda - f_{fld}d\left(r^*\theta\right). \qquad \text{Eq. 10A}$$

The total derivative of $dw_{fld}$ with respect to the independent variables $\lambda$ and $r^*\theta$ is

$$dW_{fld}\left(\lambda, r^*\theta\right) = \frac{\partial W_{fld}}{\partial \lambda} d\lambda + \frac{\partial W_{fld}}{\partial \left(r^*\theta\right)} d\left(r^*\theta\right). \qquad \text{Eq. 11A}$$

Observation of Eq. 10A and 11A indicates that

$$f_{fld} = -\frac{\partial W_{fld}}{\partial \left(r^*\theta\right)} = -\frac{\partial}{\partial \left(r^*\theta\right)}\left[\frac{\lambda^2 g}{2N^2 \mu_o \Delta r \left(r^*\theta\right)}\right] = \frac{\lambda^2 g}{2N^2 \mu_o \Delta r \left(r^*\theta\right)^2}. \qquad \text{Eq. 12A}$$

Substituting $\lambda = L(r^*\theta)i$ from Eq. 4A into Eq. 12A, the following dependence of $f_{fld}$ on coil current, i, is obtained:

$$f_{fld} = \frac{N^2 \mu_o \Delta r}{2g} i^2. \qquad \text{Eq. 13A}$$

Ultimately, the torque produced from $f_{fld}$ acting at a radius $r^*$ is needed for an individual blade 350/pole 320 set. This resulting torque is

$$T_{fld} = \frac{N^2 \mu_o \Delta r}{2g} r^* i^2. \qquad \text{Eq. 14A.}$$

SRM Torque Generation

The key result of the above analysis is the following equation for the torque generated by a single blade 350/pole 320 set interaction as depicted in FIGURES 5A and 5B:

$$T_{fld} = \frac{N^2 \mu_o \Delta r}{2g} r^* i^2 \qquad (1)$$

In Eq. 1, $T_{fld}$ is the torque generated by the magnetic field, $N$ is the total number of winding encirclements around the stator pole core, $\mu_o$ is the permeability of free space, $\Delta r = r_o - r_i$ (radial dimension of the rotor blade), $r^* = r_i + \Delta r/2$ (radius to the blade center), i is the coil current, and g is the air gap dimension.

In particular embodiments, a rotor/stator configuration (e.g., the rotor/stator configuration 300 of FIGURES 5A and 5B) can be integrated with other features such as a gerotor compressor and other embodiments described in the following United States Patents and Patent Application Publication No. 2003/0228237; Publication No. 2003/0215345; Publication No. 2003/0106301; Patent No. 6,336,317; and Patent No. 6,530,211.

The following assumptions may be made with the application of Eq. 1 to design an integral compressor/SRM:

1) laminated Sofcomag (2.3 Tesla saturation limit) is used to carry magnetic flux
2) magnetic flux is limited to 2.0 Tesla, below saturation
3) four poles are magnetized at any given time
4) fringe effects in the laminates are ignored

As an example, an industrial compressor requires roughly 2.6 MW. Operating at 3,600 rpm, the torque required is 6,896 N-m. Appropriate selection and sizing of the rotor to process the specified capacity yields $r_i$ = 14 in (0.3556 m). A reasonable gap dimension given thermal expansion and bearing play is $g$ = 0.080 in (0.00203 m). With assumption 2, the maximum ampere-turn product may be calculated such that a 2 Tesla flux density is not exceeded. Also from the above analysis,

$$Ni = \frac{2gB}{\mu_o}. \qquad (2)$$

The maximum product of *Ni* can be calculated as 6,468 A. Because $r^* = r_i + \Delta r/2$, $\Delta r$ is selected along with the number of blade/pole arrays stacked in the axial direction to satisfy the torque requirement. Recalling that four blade/pole sets are active at a given instant in time and letting *m* be the number of stacked arrays, the total torque is

$$T_{tot} = 4T_{fld}m \,. \qquad\qquad (3)$$

For $\Delta r$ = 4.5 in (0.127 m), $r^*$ = 16.5 in (0.4191 m). Letting *m* = 3, $T_{tot}$ can be calculated as 7,323 N-m. The resulting power output at 3,600 rpm is 2.76 MW.

Design Case Implementation

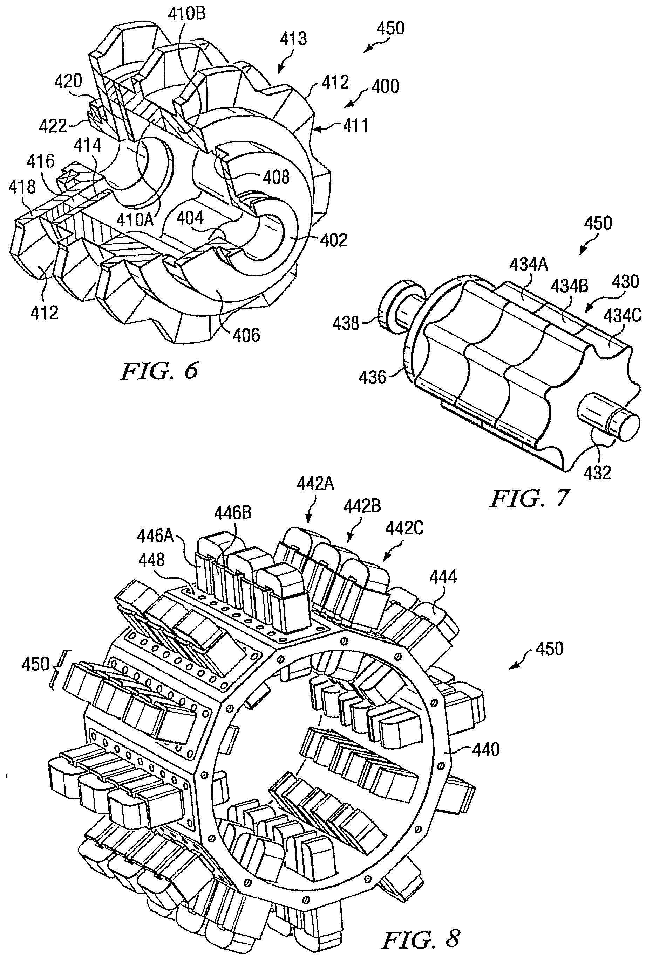

FIGURES 6-10 illustrate a rotor/stator configuration 450, according to an embodiment of the invention. The rotor/stator configuration 450 of FIGURES 6-10 is used with a compressor. However, as briefly referenced above, in particular embodiments, the rotor/stator configuration 450 may be utilized as other types of motors and other types of electric machines such as generators. The rotor/state configuration 450 of FIGURES 6-10 includes three stacked arrays of twelve stator poles 444 and eight rotor blades 412. The rotor/stator configuration 450 for the compressor in FIGURES 6-10 may operate in a similar manner to the rotor/state configuration 300 described above with reference to FIGURES 5A and 5B. FIGURE 6 shows an outer rotor assembly 400 of the rotor/stator configuration 450, according to an embodiment of the invention. The outer rotor assembly 400 in FIGURE 6 includes a bearing cap 402, a bearing sleeve 404, a port plate 406, inlet/outlet ports 408, two rotor segments 410A/410B with rotor blades 412 mounted, a seal plate 414 to separate the dry compression region from the lubricated gear cavity, a representation of the outer gear 416 (internal gear), an end plate 418 with blades 412 mounted, an outer rear bearing 420, and another bearing cap 422. In this embodiment, the outer compressor rotor serves as the rotor for the SRM.

In this embodiment, there are eight outer rotor lobes 411 with eight blades 412 in each radial array 413 of rotor poles. In particular embodiments, such symmetry may be necessary to minimize centrifugal stress/deformation. In this configuration, ferromagnetic materials utilized for the operation of the rotor/stator configuration 450 may only be placed in the blades 412 of the radial array 413.

FIGURE 7 shows an inner rotor assembly 430 of the rotor/stator configuration 450, according to an embodiment of the invention. The inner rotor assembly 430 of FIGURE 7 includes an inner shaft 432, a stack of three (seven lobed) inner rotors 434A/434B/434C, a spur gear 436, and an inner rear bearing 438.

Details of operation of the inner rotor assembly 430 with respect to the outer rotor assembly 400, according to certain embodiments of the invention, as well as with other configuration variations are described in further detail in one ore more of the following United States Patents and/or Patent Application Publication No. 2003/0228237; Publication No. 2003/0215345; Publication No. 2003/0106301; Patent No. 6,336,317; and Patent No. 6,530,211.

FIGURE 8 shows a stator/compressor case 440 of the rotor/stator configuration 450, according to an embodiment of the invention. The stator/compressor case 440 of FIGURE 8 in this embodiment includes three stacks 442A, 442B, 442C of twelve stator poles 444, spaced at equal angles. Although the stator poles 444 could be mounted to the case 440 in many ways, an external coil embodiment is shown in FIGURE 8. There are two coils 446A, 446B per stator pole 444, which are mounted in sets of three into a nonferromagnetic base plate 448, forming a bolt-in pole cartridge 450. In particular embodiments, the coils 446A, 446B may be copper coils. In other embodiments, the coils 446A, 446B may be made of other materials. In particular embodiments, the number of coils 446 on a given stator pole 444 can be increased above two, thereby reducing the voltage that must be supplied to each coil. During operation of particular embodiments, all poles in four cartridges 450 (90° apart) may be magnetized simultaneously. The magnetization occurs sequentially causing the outer rotor assembly 400 of FIGURE 6 to rotate.

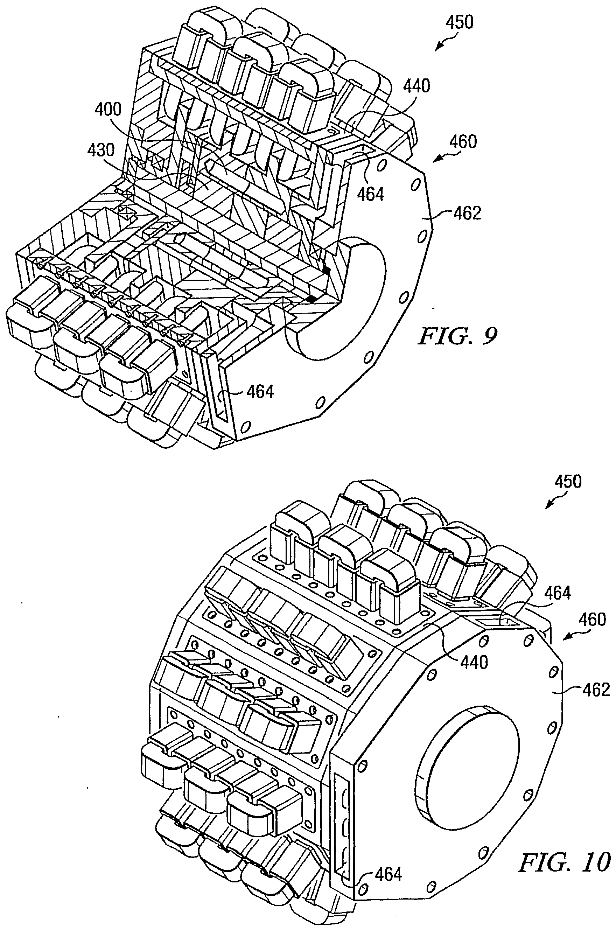

FIGURE 9 shows a cutaway view of a composite assembly 460 of a rotor/stator configuration 450, according to an embodiment of the invention. The composite assembly 460 shows an integration of the outer assembly 400, the inner assembly 430, and the stator/compressor case 440 of FIGURES 6 - 8 as well as end plates 462 providing bearing support and gas inlet/outlet porting through openings 464. FIGURE 10 shows the composite assembly 460 without the cutaway.

In certain embodiments, during operation, the rotor may expand due to centrifugal and thermal effects. To prevent contact between the rotor poles and stator poles, a large air gap is typically used. Equation 1 above described with reference to FIGURES 5A and 5B shows that the torque is strongly affected by the air gap. A smaller gap results in more torque. Accordingly, there are advantages to reducing the gap as small as possible. Teachings of some embodiments recognize configurations for maintaining small gap during thermal and centrifugal expansion of a rotor.

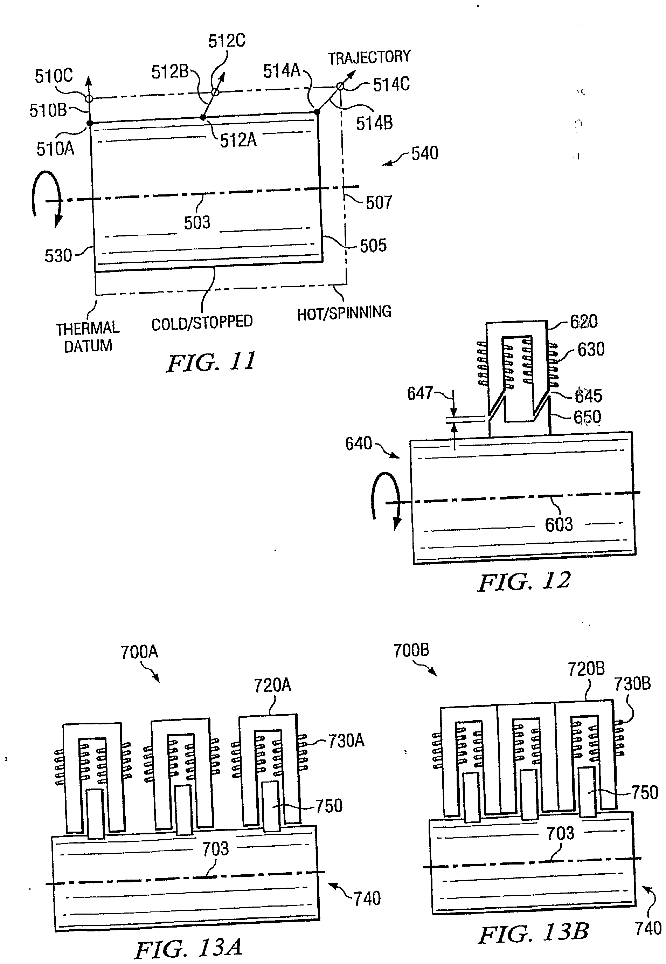

FIGURE 11 shows a side view of how a rotor 540 changes shape when it expands due to centrifugal and thermal effects. The rotor 540 has an axis of rotation 503. The solid line 505 represents the rotor 540 prior to expansion and the dotted line 507 represents the rotor 540 after expansion. Dots 510A, 512A, and 514A represent points on the rotor 540 at the cold/stopped position and dots 510C, 512C, and 514C represent the same points on the rotor 540 at the hot/spinning position. The left edge or thermal datum 530 does not change because it is held in place whereas the right edge is free to expand. The trajectories 510B, 512B, and 514B of dots is purely radial at the thermal datum 530 and becomes more axial at distances farther from the thermal datum 530.

FIGURE 12 shows a rotor/stator configuration 600, according to an embodiment of the invention. The rotor/stator configuration 600 includes a rotor 640 that rotates about an axis 603. The rotor 640 includes rotor poles 650 that interact with stator poles 620, for example, upon firing of coils 630. The rotor/stator configuration 600 of FIGURE 12 may operate in a similar manner to the rotor/stator configuration 300 of FIGURES 5A and 5B, except for an interface 645 between the rotor pole 650 and the stator pole 620. In the rotor/stator configuration 600 of FIGURE 12, an angle of interface 645 between the rotor pole 650 and stator pole 620 is the same as the trajectory of a dot on the surface of the rotor 540 shown in FIGURE 11. By matching these angles, the surface of the rotor pole 650 and the surface of the stator pole 620 slide past each other without changing an air gap 647, even as the rotor 640 spins and heats up. This design allows for very small air gaps to be maintained even at a wide variety of rotor temperatures. In particular embodiments, the housing that holds the stator pole 620 may be assumed to be maintained at a constant temperature. Various different angles of interface 645 may be provided in a single configuration for a rotor pole 650/stator pole 620 pair, dependant upon the trajectory of the dot on the surface of the rotor 640.

FIGURE 13A and 13B show a rotor/stator configuration 700A, 700B, according to another embodiment of the invention. The rotor/stator configurations 700A, 700B include rotors 740 that rotate about an axis 703. The rotor/stator configurations 700A, 700B of FIGURES 13A and 13B may operate in a similar manner to the rotor/stator configuration 300 of FIGURES 5A and 5B, including rotor poles 750, stator poles 720A, 720B, and coils 730A, 730B. The rotor/stator configuration 700A of FIGURE 13A show three U-shaped stators 720A, operating as independent units. The rotor/stator configuration 700B of and FIGURE 13B shows a single E-shaped stators 710B operating like three integrated U-shaped stators 720A. This E-shaped stator 720B allows for higher torque density. Although an E-shaped stator 720B is shown in FIGURE 13B, other shapes may be used in other embodiments in integrating stator poles into a single unit.

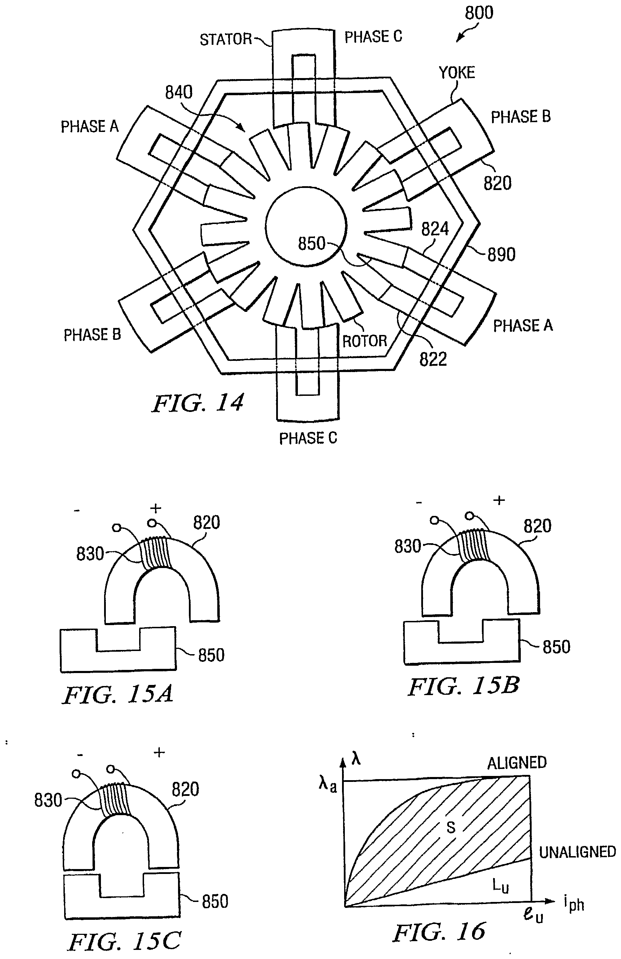

FIGURE 14 shows a rotor/stator configuration 800, according to another embodiment of the invention. In a similar manner to that described above with other embodiments, the rotor/stator configuration 800 of FIGURE 14 may be utilized with various types of electric machines, including motors and generators. The rotor/stator configuration 800 of FIGURE 14 may operate in a similar manner to the rotor/stator configuration 300 of FIGURES 5A and 5B, including rotor poles 850 and U-shaped stator poles 820. However, the stator poles 820 have been axially rotated ninety degrees such that the rotor poles 850 do not transverse between a gap of the U-shape stator poles 820. Similar to FIGURES 5A and 5B, the flux path is relatively short. For example, the magnetic flux produced by a coil fired on the U-shaped pole 820 would pass through one leg 822 of the pole 820 through the rotor pole 850 through a periphery of the rotor through another rotor pole 850 and to the other leg 824 of the pole 820 in a circular-like path.

The rotor/stator configuration 800 of FIGURE 14 is shown with three phases A, B, and C and two pairs of stator poles 820 per each phase. In this embodiment, stator poles 820 are U- shaped iron cores with coils that are inserted into a non-ferromagnetic yoke 890. In other embodiments the stator poles 820 may be made of materials other than iron and may have other configurations. The stator poles 820 in particular embodiments may be electrically and magnetically isolated from each other. The rotor 840 in the embodiment of FIGURE 14 may operate like a rotor of a conventional SRM; however, unlike a conventional SRM, the pitches of the rotor pole 850 and stator pole 820 are the same.

The magnetic reluctance of each phase changes with position of the rotor 840. As shown in FIGURE 15, when a rotor pole 850 is not aligned with two stator poles 820, the phase inductance is at a minimum and this position may be called an unaligned position. When the rotor pole 850 is aligned with the stator pole 820, the magnetic inductance is at a maximum and this position may be called an aligned position. Intermediate between the aligned position and unaligned position is an intermediate position. SRM torque is developed by the tendency of the magnetic circuit to find the minimum reluctance (maximum inductance) configuration.

The configuration of FIGURE 14 is such that whenever the rotor 840 is aligned with one phase, the other two phases are half-way aligned, so the rotor 840 can move in either direction depending which phase will be excited next.

For a phase coil with current $i$ linking flux, the co-energy $W'$ can be found from the definite integral:

$$W' = \int_0^i \lambda di \qquad (4)$$

The torque produced by one phase coil at any rotor position is given by:

$$T = \left[\frac{\partial W'}{\partial \theta}\right]_{i=constant} \tag{5}$$

The output torque of an SRM is the summation of torque of all phases:

$$T_m = \sum_{j=1}^{N} T(i_j, \theta) \tag{6}$$

If the saturation effect is neglected, the instantaneous torque can be given as:

$$T = \frac{1}{2} i^2 \frac{dL}{d\theta} \tag{7}$$

From Equation 7, it can be seen that to produce positive torque (motoring torque) in SRM, the phase has to be excited when the phase bulk inductance increases, which is the time that the rotor moves towards the stator pole. Then it should be unexcited when it is in aligned position. This cycle can be shown as a loop in flux linkage ($\lambda$) - phase current ($i_{ph}$) plane, which is called energy conversion loop as shown in FIGURE 16. The area inside the loop ($S$) is equal to the converted energy in one stroke. So the average power ($P_{ave}$) and the average torque of the machine ($T_{ave}$) can be calculated as follows:

$$P_{ave} = \frac{N_p N_r N_s S \omega}{4\pi} \tag{8}$$

$$T_{ave} = \frac{N_p N_r N_{ph} S}{4\pi} \tag{9}$$

where, $N_p$, $N_r$, $N_{ph}$, $\omega$ are the number of stator pole pairs per phase, number of rotor poles, number of stator phases, and rotor speed, respectively.

By changing the number of phases, stator pole pitch, and stator phase-to-phase distance angle, different types of short-flux-path SRMs can be designed.

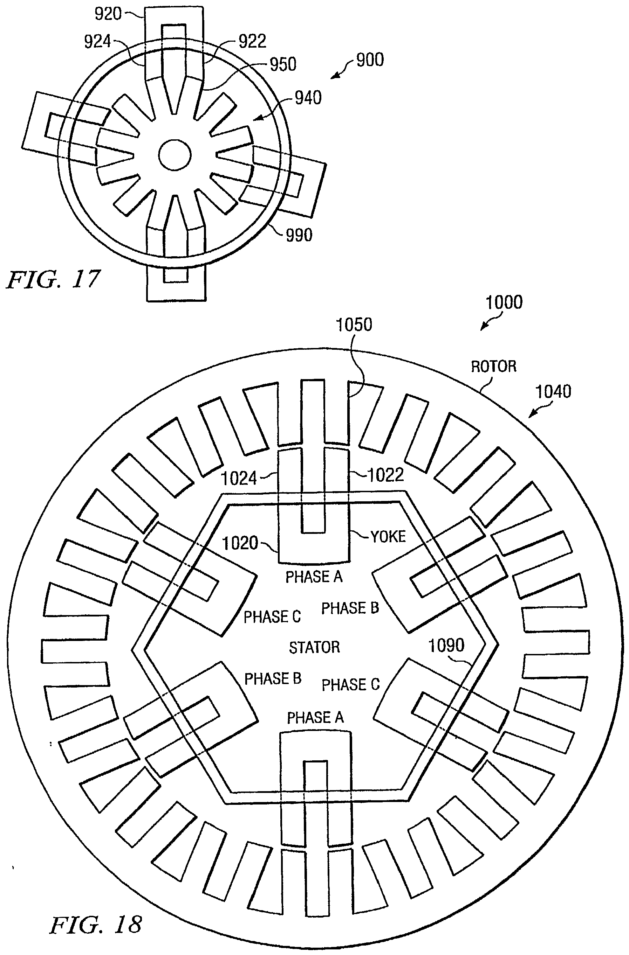

FIGURE 17 shows a rotor/stator configuration 900, according to another embodiment of the invention. The rotor/stator configuration 900 of FIGURE 17 is a two-phase model, which operates in a similar manner to the model described with reference to FIGURE 14. The configuration 900 of FIGURE 17 includes rotor 940; rotor poles 950; stator poles 920; legs 922, 924; and yoke 990.

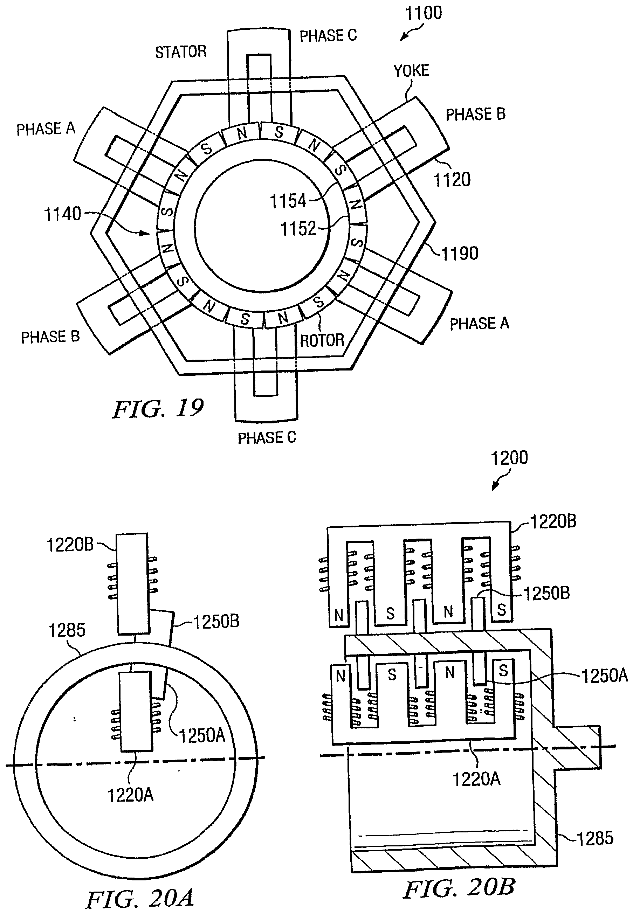

FIGURE 18 shows a rotor/stator configuration 1000, according to another embodiment of the invention. In a similar manner to that described above with other embodiments, the rotor/stator configuration 1000 of FIGURE 18 may be utilized with various types of electric machines, including motors and generators. The rotor/stator configuration 1000 of FIGURE 18 may operate in a similar manner to rotor/stator configuration 1000 of FIGURE 14, including U-shaped stator poles 1020, rotor poles 1050, a non-ferromagnetic yoke 1080, and phases A, B, and C. However, in the rotor/stator configuration 1000 of FIGURE 18, the rotor poles 1050 are placed radially outward from the state poles 1020. Accordingly, the rotor 1040 rotates about the stator poles 1020. Similar to FIGURE 14, the flux path is relatively short. For example, the magnetic flux produced by a coil fired on the U-shaped pole 1020 would pass through one leg 1022 of the stator pole 1020 through the rotor pole 1050 and to the other leg 1024 of the stator pole 820 in a circular-like path. As one example application of the rotor/stator configuration 1000 according to a particular embodiment, the rotor/stator configuration 1000 may be a motor in the hub of hybrid or electric (fuel cell) vehicles, and others. In this embodiment, the wheel is the associated with the rotor 1040, rotating about the stators 1020. This rotor/stator configuration 1000 may additionally be applied to permanent magnet motors, for example, as shown in FIGURE 19.

FIGURE 19 shows a rotor configuration 1100, according to another embodiment of the invention. The rotor/stator configuration 1100 of FIGURE 14 may operate in a similar manner to rotor/stator configuration 1100 of FIGURE 14, including U-shaped stator poles 1120, a non-ferromagnetic yoke 1190, and phases A, B, and C, except that a rotor 1140 contains alternating permanent magnet poles 1152, 1154.

FIGURE 20 shows a rotor/stator configuration 1200, according to another embodiment of the invention. In a similar manner to that described above with other embodiments, the rotor/stator configuration 1200 of FIGURE 20 may be utilized with various types of electric machines, including motors and generators. The rotor/stator configuration 1200 of FIGURE 20 integrates several concepts described with reference to other embodiments, including blades 1250A, 1250B from FIGURES 5A and 5B; E-shaped stator poles 1220A, 1220B from FIGURE 13B; stator poles 1220B radially inward of rotor poles 1250B from FIGURES 6-10; and stator poles 1220A radially outward of rotor poles 1250B from FIGURE 18. The stator poles 1220A are rigidly mounted both on the inside and outside of a drum 1285, which allows torque to be applied from both the inside and outside thereby increasing the total torque and power density. In particular embodiments, the rotor poles 1250A, 1250B may be made of a ferromagnetic material, such as iron, which is a component of a switched reluctance motor. In other embodiments, the rotor poles 1250A, 1250B could be permanent magnets with the poles parallel to the axis of rotation, which would be a component of a permanent magnet motor.

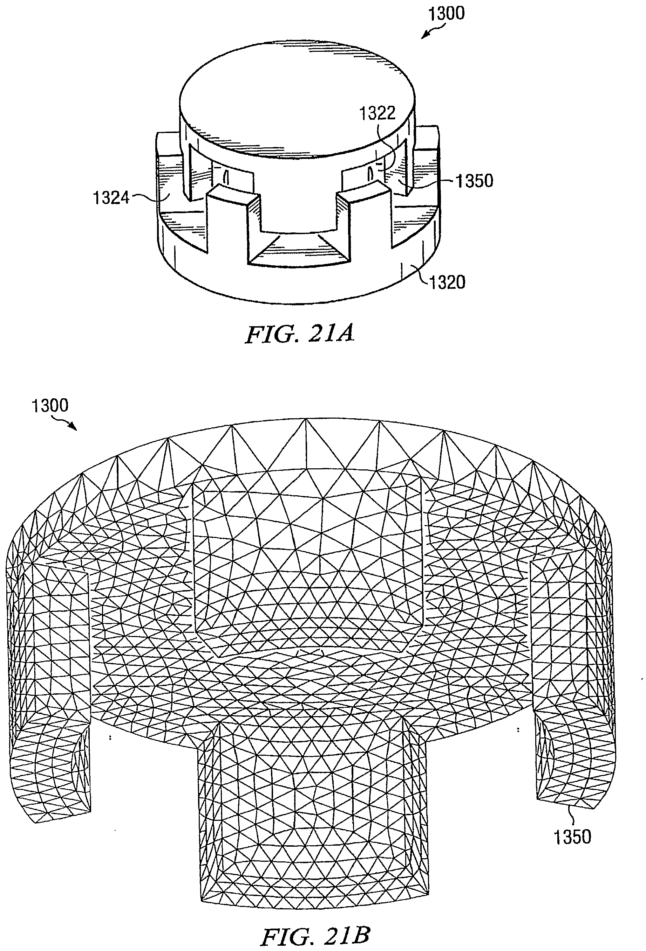

FIGURES 21A and 21B show a rotor/stator configuration 1300, according to another embodiment of the invention. In a similar manner to that described above with other embodiments, the rotor/stator configuration 1200 of FIGURES 21A and 21B may be utilized with various types of electric machines, including motors and generators. The rotor/stator configuration 1300 of FIGURES 21A and 21B may operate in a similar manner to the rotor/stator configuration 1300 of FIGURES 5A and 5B, including rotor poles 1350 and U-shaped stator poles 1320. However, the rotor poles 1350 and U-shaped stator poles 1320 have been rotated ninety degrees such that rotor poles 1350 rotate between a leg 1322 of the stator pole 1320 that is radially inward of the rotor pole 1350 and a leg 1324 of the stator pole 1320 that is radially outward of the rotor pole 1350. In the embodiment of the rotor/stator configuration 1300 of FIGURES 21A and 21B, it can be seen that the axial and radial fluxes co-exist.

In this embodiment and other embodiments, there may be no need for a magnetic back-iron in the stator. Further, in this embodiment and other embodiments, the rotor may not carry any magnetic source. Yet further, in particular embodiments, the back iron of the rotor may not need to be made of ferromagnetic material, thereby creating flexibility design of the interface to the mechanical load.

In this embodiment and other embodiments, configuration may offer higher levels of power density, a better participation of stator and the rotor in force generation process and lower iron losses, thereby offering a good solution for high frequency applications. In various embodiments described herein, the number of stator and rotor poles can be selected to tailor a desired torque versus speed characteristics. In particular embodiments, cooling of the stator may be very easy. Further, the modular structure of certain embodiments may offer a survivable performance in the event of failure in one or more phases.

Optimization of the magnetic forces

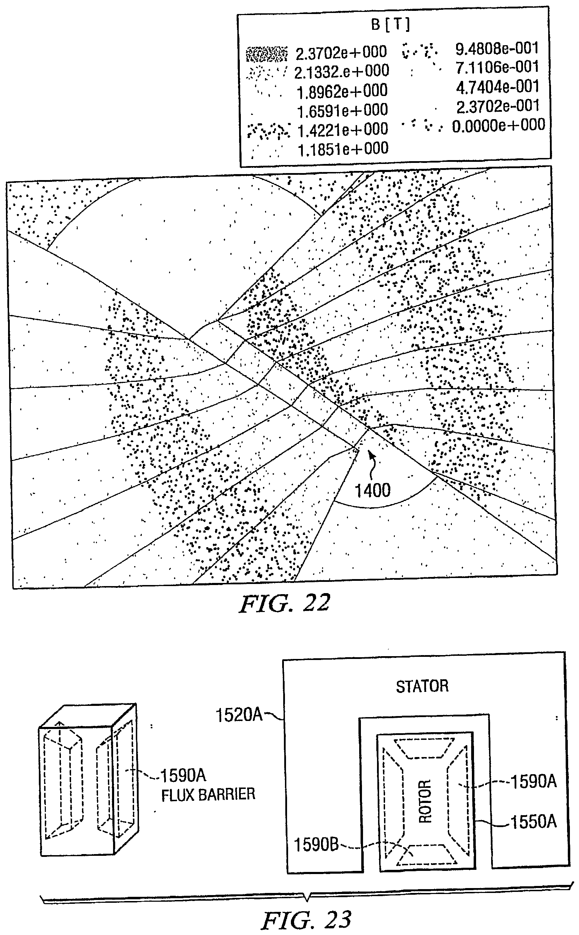

FIGURES 22-25 illustrate an optimization of magnetic forces, according to embodiments of the invention. The electromagnetic force on the surface of a rotor has two components, one that is perpendicular to the direction of motion and one that is tangent to the direction of motion. These components of the force may be referred to as normal and tangential components of the force and can be computed from magnetic field quantities according to the following equations:

$$f_n = \frac{1}{2\mu_0}(B_n^2 - B_t^2)$$

$$f_t = \frac{1}{\mu_0}B_n B_t$$

For an optimal operation, the tangential component of the force needs to be optimized while the normal component of the force has to be kept at a minimal level or possibly eliminated. This, however, is not the case in conventional electromechanical converters. To the contrary, the normal force forms the dominant product of the electromechanical energy conversion process. The main reason for this can be explained by the continuity theorem given below. As the flux lines enter from air into a ferromagnetic material with high relative permeability the tangential and normal components of the flux density will vary according to the following equations:

$$B_{n,air} = B_{n,iron}$$

$$B_{t,air} = \frac{1}{\mu_{r,iron}} B_{t,iron}$$

The above equations suggest that the flux lines in the airgap will enter the iron almost perpendicularly and then immediately change direction once enter the iron. This in turn suggests that in a SRM and on the surface of the rotor we only have radial forces.

FIGURE 22 illustrates the formation of flux lines in a SRM drive. The flux density, B, is shown in Teslas (T). The radial forces acting on the right side of the rotor (also referred to as fringing flux - indicated by arrow 1400) create radial forces (relative to the rotor surface) that create positive propelling force for the rotor. This is the area that needs attention. The more fluxes are pushed to this corner, the better machine operates. This explains why SRM operates more efficient under saturated condition. This is because due to saturation, the effective airgap of the machine has increased and more flux lines are choosing the fringing path.

To enhance the migration of flux lines towards the fringing area, one embodiment of the invention uses a composite rotor surface. In the composite rotor surface, the top most part of the of the rotor is formed by a material that goes to saturation easier and at a lower flux density, thereby reinforcing the fringing at an earlier stage of the electromechanical energy conversion process. In particular embodiments, the shape of the flux barrier or the shape of the composite can be optimized to take full advantage of the magnetic configuration. In another embodiment, flux barriers can be introduced in the rotor to discriminate against radial fluxes entering the rotor normally and push more flux lines towards the fringing area. FIGURES 23, 24 and 25 illustrate these embodiments.

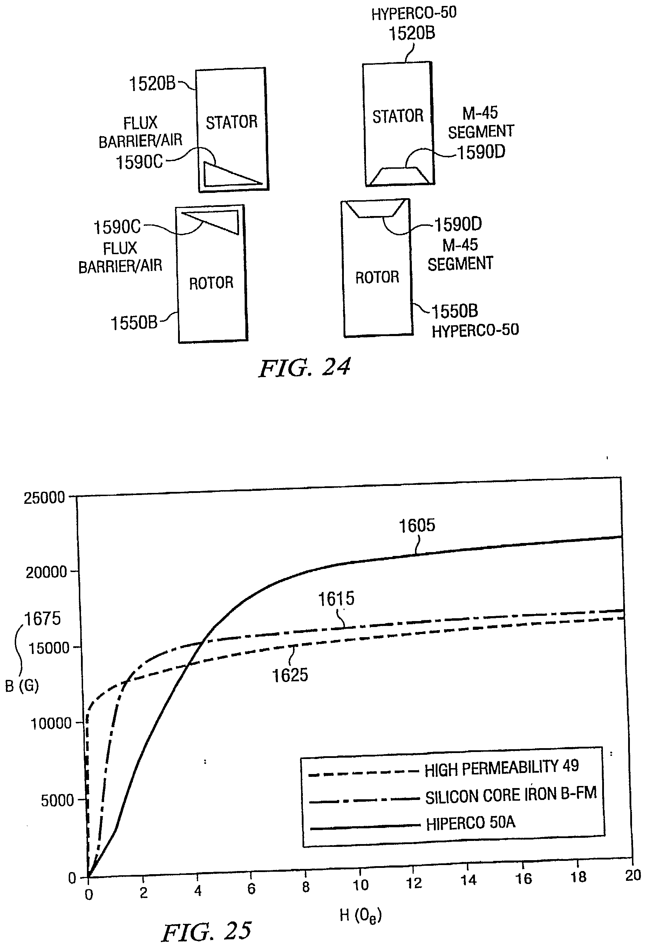

FIGURES 23 and 24 show the placement of easily saturated materials or flux barriers 1590A, 1590B, 1590C, and 1590D under the surface of rotors 1550A, 1550B, and stators 1520A, 1520B. Example materials for easily saturated materials or flux barriers 1590 include, but are not limited to M-45. Example ferromagnetic materials for the rotors 1550 and stators 1520 include, but are not limited HyperCo-50. The shape, configuration, and placement of the easily saturated materials or flux barriers may change based on the particular configurations of the rotors and stators.

FIGURE 25 shows a chart 1600 of B-H curve for various alloys. The chart 1600 of FIGURE 25 charts magnetic flux density 1675, B, against magnetic field 1685, H, for alloys 1605, 1615, and 1625.

The short-flux-path configurations described with reference to several embodiments herein may be implemented for any SRM application, by changing the number of stator and rotor poles and sizes. Similar configuration may be utilized for axial-field and linear motors.

Several embodiments described herein may additionally be used for permanent magnet AC machines where the rotor contains alternating permanent magnet poles. Both of these families of machines, SRM and BLDC, may be used as both motors and generators.

Additionally, the embodiments described above may be turned inside out and used as an interior stator SRM or BLDC machine, with the rotor on the outside. These in turn can be used both for motoring or generating or both.

Numerous other changes, substitutions, variations, alterations, and modifications may be ascertained to one skilled in the art and it is intended that the present invention encompass all such changes, substitutions, variations, alterations, and modifications as falling within the scope of the appended claims.

**Claims**

1. An electric machine, comprising:

a stator (720) having a plurality of coils (730); and
a rotor (740) having a plurality of magnets (750), the plurality of coils (730) and magnets (750) circumferentially positioned around the electrical machine with respect to an axis of rotation (703) of the rotor (740), the plurality of magnets (750) configured to interact with the plurality of coils (730) across an air gap to create flux paths parallel to the axis of rotation (703) of the rotor when a respective magnet is aligned with a respective coil, wherein the coils (730) and magnets (750) have an alternating north-south pole arranged in the axis direction such that each of at least some of the plurality of coils (730) simultaneously interact with two different magnets (750) across two respective air gaps when the respective two different magnets (750) are respectively aligned with the coil (730).

2. The electric machine of Claim 1, wherein the at least some of the plurality of coils (730) simultaneously interacting with two different magnets (750) are at least ten in a plane perpendicular to an axis of rotation (703).

3. The electric machine of Claim 1, wherein the at least some of the plurality of coils (730) simultaneously interacting with two different magnets (750) are at least twenty in two different planes perpendicular to the axis of rotation (703) of the electric machine.

4. The electric machine of Claim 1, wherein the electric machine is a motor (100), and optionally a switched reluctance motor (100).

5. The electric machine of Claim 1, wherein the electric machine is a generator.

6. The electric machine of Claim 1, wherein the at least some of the plurality of coils (730) simultaneously interacting with two different magnets (750) have a portion of the respective coils (730) positioned a distance less than a maximum radius of rotation of the two different magnets (750).

7. The electric machine of Claim 1, wherein the at least some of the plurality of coils (730) simultaneously interacting with two different magnets (750) have a portion of the respective coils (730) positioned a distance greater than a maximum radius of rotation of the two different magnets (750).

8. The electric machine of Claim 1, wherein an interior of the rotor (740) is a compressor, or an expander.

9. The electric machine of Claim 1, further comprising:
an encasing (440) separating an interior portion of the electrical machine from an exterior portion of the electrical machine, wherein at least some of the plurality of coils (730) are disposed on an exterior of the casing (440).

10. The electric machine of Claim 1, further comprising:
at least two coils (730) disposed on the at least one stator pole (720), one of the at least two coils (730) disposed on each of the first leg and second leg, the at least two coils (730) operable to induce the magnetic flux.

11. The electric machine of Claim 1, wherein
the stator includes legs to conduct a magnetic flux either to or from one of the plurality of coils (730), and
a magnetic flux between a respective magnet (750) and coil (730) is induced by rotating the magnet (750) between the two legs.

12. The electric machine of Claim 11, wherein
at least some of the legs extend away from an axis of rotation (703) of the rotor (740).

13. The electric machine of Claim 11, wherein at least some of the plurality of magnets (750) extend further from the axis of rotation (703) of the rotor (740) than any other portion of the rotor (740).

14. The electric machine of Claim 1, wherein
at least two of the coils (730) may be electrically fired at the same time to attract at least two different magnets (750).

**Patentansprüche**

1. Elektrische Maschine, umfassend:

einen Stator (720) mit einer Mehrzahl von Spulen (730); und
einen Rotor (740) mit einer Mehrzahl von Magneten (750),
wobei die Mehrzahl von Spulen (730) und Magneten (750) in Umfangsrichtung um die elektrische Maschine in Bezug auf eine Drehachse (703) des Rotors (740) positioniert sind, wobei die Mehrzahl von Magneten (750) dazu ausgebildet sind, mit der Mehrzahl von Spulen (730) über einen Luftspalt zusammenzuwirken, um Flusswege parallel zur Drehachse (703) des Rotors zu erzeugen, wenn ein jeweiliger Magnet mit einer jeweiligen Spule ausgerichtet ist, wobei
die Spulen (730) und Magnete (750) einen abwechselnden Nord-Süd-Pol aufweisen, der so in der Achsenrichtung angeordnet ist, dass jede von wenigstens einigen der Mehrzahl von Spulen (730) gleichzeitig mit zwei verschiedenen Magneten (750) über zwei jeweilige Luftspalte zusammenwirkt, wenn die jeweiligen zwei verschiedenen Magnete (750) jeweils mit der Spule (730) ausgerichtet sind.

2. Elektrische Maschine nach Anspruch 1, wobei die wenigstens einigen der Mehrzahl von Spulen (730), die mit zwei verschiedenen Magneten (750) zusammenwirken, wenigstens zehn in einer Ebene senkrecht zu einer Drehachse (703) sind.

3. Elektrische Maschine nach Anspruch 1, wobei die wenigstens einigen der Mehrzahl von Spulen (730), die mit zwei verschiedenen Magneten (750) zusammenwirken, wenigstens zwanzig in zwei verschiedenen Ebenen senkrecht zur Drehachse (703) der elektrischen Maschine sind.

4. Elektrische Maschine nach Anspruch 1, wobei die elektrische Maschine ein Motor (100) und optional ein geschalteter Reluktanzmotor (100) ist.

5. Elektrische Maschine nach Anspruch 1, wobei die elektrische Maschine ein Generator ist.

6. Elektrische Maschine nach Anspruch 1, wobei die wenigstens einigen der Mehrzahl von Spulen (730), die gleichzeitig mit zwei verschiedenen Magneten (750) zusammenwirken, einen Abschnitt der jeweiligen Spulen (730) aufweisen, der in einem Abstand positioniert ist, der weniger als ein maximaler Drehradius der zwei verschiedenen Magneten (750) beträgt.

7. Elektrische Maschine nach Anspruch 1, wobei die wenigstens einigen der Mehrzahl von Spulen (730), die gleichzeitig mit zwei verschiedenen Magneten (750) zusammenwirken, einen Abschnitt der jeweiligen Spulen (730) aufweisen, der in einem Abstand positioniert ist, der größer als ein maximaler Drehradius der zwei verschiedenen Magneten (750) beträgt.

8. Elektrische Maschine nach Anspruch 1, wobei ein Inneres des Rotors (740) ein Kompressor oder ein Expander ist.

9. Elektrische Maschine nach Anspruch 1, ferner umfassend:
ein Gehäuse (440), die einen Innenabschnitt der elektrischen Maschine von einem Außenabschnitt der elektrischen Maschine trennt, wobei wenigstens einige der Mehrzahl von Spulen (730) an einem Äußeren des Gehäuses (440) angeordnet sind.

10. Elektrische Maschine nach Anspruch 1, ferner umfassend:
wenigstens zwei Spulen (730), die auf dem mindestens einen Statorpol (720) angeordnet sind, wobei eine der wenigstens zwei Spulen (730) auf jedem des ersten und zweiten Schenkels angeordnet ist, wobei die mindestens zwei Spulen (730) dafür einsetzbar sind, den Magnetfluss herbeizuführen.

11. Elektrische Maschine nach Anspruch 1, wobei
der Stator Schenkel aufweist, um einen Magnetfluss entweder zu oder von der Mehrzahl von Spulen (730) zu leiten, und
ein Magnetfluss zwischen einem jeweiligen Magneten (750) und einer jeweiligen Spule (730) durch Drehen des Magneten (750) zwischen den zwei Schenkeln herbeigeführt wird.

12. Elektrische Maschine nach Anspruch 11, wobei
sich wenigstens einige der Schenkel weg von einer Drehachse (703) des Rotors (740) erstrecken.

13. Elektrische Maschine nach Anspruch 11, wobei sich wenigstens einige der Mehrzahl von Magneten (750) weiter von der Drehachse (703) des Rotors (740) erstrecken als jeder andere Abschnitt des Rotors (740).

14. Elektrische Maschine nach Anspruch 1, wobei wenigstens zwei der Spulen (730) gleichzeitig elektrisch gezündet werden können, um wenigstens zwei verschiedene Magneten (750) anzuziehen.

**Revendications**

1. Machine électrique, comprenant :

un stator (720) ayant une pluralité de bobines (730) ; et
un rotor (740) ayant une pluralité d'aimants (750), la pluralité de bobines (730) et d'aimants (750) étant positionnés de manière circonférentielle autour de la machine électrique par rapport à un axe de rotation (703) du rotor (740), la pluralité d'aimants (750) étant configurés pour interagir avec la pluralité de bobines (730) à travers un entrefer pour créer des chemins de flux parallèles à l'axe de rotation (703) du rotor lorsqu'un aimant respectif est aligné avec une bobine respective,

les bobines (730) et les aimants (750) ayant un pôle nord-sud alternant agencé dans la direction de l'axe de telle sorte que chacune d'au moins certaines bobines de la pluralité de bobines (730) interagisse simultanément avec deux aimants différents (750) à travers deux entrefers respectifs lorsque les deux aimants différents (750) sont respectivement alignés avec la bobine (730).

2.  Machine électrique selon la revendication 1, les au moins certaines bobines de la pluralité de bobines (730) interagissant simultanément avec deux aimants différents (750) étant au moins au nombre de dix dans un plan perpendiculaire à un axe de rotation (703).

3.  Machine électrique selon la revendication 1, les au moins certaines bobines de la pluralité de bobines (730) interagissant simultanément avec deux aimants différents (750) étant au moins au nombre de vingt dans deux plans différents perpendiculaires à l'axe de rotation (703) de la machine électrique.

4.  Machine électrique selon la revendication 1, la machine électrique étant un moteur (100), et éventuellement un moteur à réluctance commutée (100).

5.  Machine électrique selon la revendication 1, la machine électrique étant un générateur.

6.  Machine électrique selon la revendication 1, les au moins certaines bobines de la pluralité de bobines (730) interagissant simultanément avec deux aimants différents (750) ayant une partie des bobines respectives (730) positionnée à une distance inférieure à un rayon de rotation maximal des deux aimants différents (750).

7.  Machine électrique selon la revendication 1, les au moins certaines bobines de la pluralité de bobines (730) interagissant simultanément avec deux aimants différents (750) ayant une partie des bobines respectives (730) positionnée à une distance supérieure à un rayon de rotation maximal des deux aimants différents (750).

8.  Machine électrique selon la revendication 1, l'intérieur du rotor (740) étant un compresseur ou un détendeur.

9.  Machine électrique selon la revendication 1, comprenant en outre :
    un boîtier (440) séparant une partie intérieure de la machine électrique d'une partie extérieure de la machine électrique, au moins certaines bobines de la pluralité de bobines (730) étant disposées sur une partie extérieure du boîtier (440).

10. Machine électrique selon la revendication 1, comprenant en outre :
    au moins deux bobines (730) disposées sur l'au moins un pôle de stator (720), une des au moins deux bobines (730) étant disposée sur chacune des première et deuxième branches, les au moins deux bobines (730) pouvant fonctionner pour induire le flux magnétique.

11. Machine électrique selon la revendication 1,
    le stator comprenant des pattes pour conduire un flux magnétique vers ou depuis l'une de la pluralité de bobines (730), et
    un flux magnétique entre des aimant (750) et bobine (730) respectifs étant induit par la rotation de l'aimant (750) entre les deux pattes.

12. Machine électrique selon la revendication 11,
    au moins une partie des pattes s'éloignant d'un axe de rotation (703) du rotor (740).

13. Machine électrique selon la revendication 11, au moins une partie de la pluralité d'aimants (750) s'étendant plus loin de l'axe de rotation (703) du rotor (740) que toute autre partie du rotor (740).

14. Machine électrique selon la revendication 1,
    au moins deux des bobines (730) pouvant être mises sous tension électriquement en même temps pour attirer au moins deux aimants différents (750).

*FIG. 1A*

*FIG. 1B*

*FIG. 2*

FIG. 3

105

170

TORQUE (N.m)

180

190

ANGLE 160

200

ROTOR ANGLE=0°    220

225    250

235    225

FIG. 4A

ROTOR ANGLE=5°

FIG. 4B

ROTOR ANGLE=10°

FIG. 4C

ROTOR ANGLE=15°

FIG. 4D

ROTOR ANGLE=20°

FIG. 4E

ROTOR ANGLE=25°

FIG. 4F

ROTOR ANGLE=30°

ROTOR ANGLE=35°

ROTOR ANGLE=40°

*FIG. 4G*

*FIG. 4H*

*FIG. 4I*

300

330 — COILS — 320

350

g

324

$W_c$

322

$W_b$

340

*FIG. 5A*

300

β

330 — COILS — 320

θ

350

$A(\theta)$

Δr

$r_o$ $r_i$

α

340

*FIG. 5B*

FIG. 6

FIG. 7

FIG. 8

FIG. 9

FIG. 10

FIG. 11

FIG. 12

FIG. 13A

FIG. 13B

FIG. 14

FIG. 15A

FIG. 15B

FIG. 15C

FIG. 16

FIG. 17

FIG. 18

**FIG. 19**

**FIG. 20A**

**FIG. 20B**

1300

1322

1324 — 1350

1320

**FIG. 21A**

1300

1350

**FIG. 21B**

FIG. 22

FIG. 23

HYPERCO-50
1520B

1520B

STATOR | STATOR | M-45
SEGMENT
1590D

FLUX
BARRIER/AIR
1590C

1590C
FLUX
BARRIER/AIR

ROTOR | ROTOR

1590D
M-45
SEGMENT

1550B

1550B
HYPERCO-50

*FIG. 24*

*FIG. 25*

1605

1615

1625

1675

B (G)

H (O_e)

HIGH PERMEABILITY 49
SILICON CORE IRON B-FM
HIPERCO 50A

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003339128 B
- WO 02091547 A
- US 5365137 A
- US 20030228237 A
- US 20030215345 A
- US 20030106301 A
- US 6336317 B
- US 6530211 B